# EUROPÄISCHE PATENTSCHRIFT

(11) **EP 1 949 781 B1**
(45) Veröffentlichungstag und Bekanntmachung des Hinweises auf die Patenterteilung: **26.05.2010**
(21) Anmeldenummer: 08001069.7
(22) Anmeldetag: 21.01.2008
(51) Int. Cl.: A01B 73/04, A01D 78/10

(54) **Heuwerbungsmaschine**
Haymaking machine
Machine de fenaison

(30) Priorität: 23.01.2007 DE 202007001281 U
(43) Veröffentlichungstag der Anmeldung: 30.07.2008
(73) Patentinhaber: CLAAS Saulgau GmbH, 88348 Bad Saulgau (DE)
(72) Erfinder: Frick, Clemens, 88356 Ostrach (DE); Lahmann, Dirk, 33790 Halle (Westfalen) (DE); Schelkle, Roland, 88348 Bad Saulgau (DE)

(56) Entgegenhaltungen:
- DE-C1- 19 716 379
- DE-U1- 9 312 222
- US-A1- 2005 172 603

## Beschreibung

Die Erfindung betrifft eine Heuwerbungsmaschine insbesondere einen Kreiselschwader gemäß dem Oberbegriff des unabhängigen Anspruchs.

Rechkreisel von Kreiselschwadern mit gesteuerten Zinkenarmen verfügen über mit Rechzinken bestückte Zinkenarme, die in bekannter Weise von Kurvenbahnen gesteuert werden und die von einem Fahrwerk, bestehend aus Tast- und Stützrädern, bodenkopierend am Boden abgestützt werden. Bekannt sind sogenannte Einkreiselschwader aber auch Mehrkreiselschwader, wobei letztere wiederum bekannt sind als Seiten- oder Mittelschwader.

Damit die Rechkreisel dem Horizont des Bodens insbesondere in kuppiertem Gelände mit Kuppen und Senken besser folgen können, werden diese kardanisch mit dem Maschinengestell 3 des Kreiselschwaders so verbunden, dass diese Roll- und Nickbewegungen unabhängig vom Maschinengestell ausführen können. Dabei sind die Rechkreisel auf eigenen Fahrwerken, ausgestaltet mit Tast- und Stützrädern, am Boden abgestützt, so dass diese bodenkopierend dem Geländeverlauf folgen können.

Bedingt durch die Fahrbewegung und die Bodenkontur wirken Vertikalbeschleunigungen und Winkelbeschleunigungen auf die Rechkreisel ein, so dass diesen langweilige aber auch kurzweilige Schwingungen aufgezwungen werden, so dass den Vertikalbewegungen auch Roll- und Nickbewegungen überlagern. Damit die Rechkreisel diese Bewegungen quasi unabhängig vom Fahrgestell des Kreiselschwaders ausführen können, sind sie an Auslegerarmen, die in Klappgelenken um etwa in Fahrtrichtung weisende Gelenkachsen schwenkbar sind, an dem Fahrgestell angelenkt. Dabei sind die Rechkreisel am freien Ende der Auslegerarme dann kardanisch aufgehängt.

In der Arbeitsstellung des Kreiselschwaders sind die Auslegerarme ausgeklappt und in der Transportstellung hochgeklappt, so dass auch die Rechkreisel mit hochgeklappt werden. Die jeweiligen Landesgesetze hinsichtlich des öffentlichen Straßenverkehr grenzen die Transportbreite und die Transporthöhe einer gezogenen Landmaschine dieser Gattung ein, so dass die hochgeklappten Rechkreisel eine Transporthöhe von etwa 4 Metern nicht überschreiten dürfen.

Um diese Höhe nicht zu überschreiten sind Lösungen bekannt, bei denen entweder Kreiselarme für die Transportfahrt abgenommen werden können und in entsprechend ausgebildeten Halterungen am Maschinengestell befestigt werden oder auch, dass die Kreiselarme Scharniergelenke aufweisen, um deren Achsen die Kreiselarme abgewinkelt werden können und in dieser Stellung dann fixiert werden können.

Es sind weiterhin Lösungen bekannt, bei denen das gesamte Fahrwerk durch einen entsprechend ausgebildeten kraftbetriebenen Mechanismus für die Transportfahrt abgesenkt, bzw. für die Arbeitsstellung wieder angehoben werden kann. Dadurch wird die Gesamthöhe des Kreiselschwaders um den Betrag der Absenkung reduziert.

Es sind weiterhin Lösungen bekannt, bei denen die Auslegerarme zwischen der Klappachse und dem Rechkreisel ein weiteres Klappgelenk aufweisen, wobei die in Fahrtrichtung weisende Klappachse und die Klappachse des weiteren Klappgelenks etwa rechtwinkelig zueinander verlaufen, so dass die Rechkreisel um die weitere Klappachse des weiteren Klappgelenks um etwa 90" verklappt werden können, wodurch sich die Transporthöhe ebenfalls reduzieren lässt.

Es sind weiterhin Lösungen bekannt, bei denen die Rechkreisel an teleskopierbaren Auslegerarmen angelenkt sind und bei denen die Verschiebungen durch die Teleskopik genutzt werden, um die Transporthöhe zu reduzieren. Auch sind Mischformen bekannt, die die verschiedenen zuvor genannten Ausführungsarten miteinander kombinieren.

Die DE 197 16 379 beschreibt eine Heuwerbungsmaschine, insbesondere zum Schwaden von landwirtschaftlichem Halmgut mit zwei, um vertikale Achsen umlaufend angetriebenen Kreiselrechen oder dgl. Rechelemente, welche in der Arbeits- und Betriebsstellung beidseitig an einem mit Laufrädern versehenen Tragrahmen schwenkbar gelagert sind, wobei den Kreiselrechen in der Arbeits- und Betriebsstellung zumindest zwei weitere Kreiselrechen so vorgeordnet sind, dass eine durchgehende maximale Gesamtarbeitsbreite erreicht wird und die vorderen äußeren Kreiselrechen über längenveränderliche Trag- und Antriebsanordnungen am Tragrahmen um in Fahrt- und Arbeitsrichtung gerichtete Schwenkachsen schwenkbar angelenkt sind, die in Bezug zur Arbeits- und Betriebsstellung der Trag- und Antriebsanordnungen der Kreiselrechen in einem von einer Mittelebene der Trag- und Antriebsanordnungen nach unten weisenden Abstand und bezüglich der Transportstellung der Trag- und Antriebsanordnungen der Kreiselrechen in einem von der Mittelebene er Trag- und Antriebsanordnungen zur Außenlängsseite des Tragrahmens weisenden Abstand angeordnet sind

Nachteil dieser Ausführungsformen ist entweder der manuelle Umbauaufwand, der kraft- und zeitraubend ist, oder die relativ aufwendige Bauweise, die mit erheblichen Kosten verbunden ist.

Hier setzt die Erfindung an, mit dem Ziel, eine kostengünstige und bedienerfreundliche auf Bedienungskomfort ausgerichtete alternative Lösung aufzuzeigen, die es zudem ermöglichen soll, dass bei großen Rechkreiseldurchmessern die zulässige Höhe des Straßentransportprofils nicht überschritten wird und welche ein Unterqueren von Durchfahrten mit extremen Höheneinschränkungen, wie dieses bei Brücken oder Scheunentoren mit geringer Höhe der Fall sein kann, unter Ausnahmebedingungen ermöglicht.

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Erreicht wird dieses dadurch, dass die Ausrichtung des Verschiebewegs eines Rechkreisels längs seines Auslegers, welcher im Wesentlichen in Längserstreckung des Auslegerarms verläuft, wobei dem Verschiebeweg zwei Sektionen derart zugeordnet sind, dass die äußere Sektion dazu genutzt wird, den Rechkreisel in einer überwiegend horizontalen verlaufenden Ebene relativ zur Aufstandsebene noch sich auf dieser abstützend überwiegend quer zur Fahrtrichtung zu verschieben, und die innere Sektion dazu genutzt wird, den Rechkreisel, nachdem sich dieser in eine überwiegend vertikale Lage nunmehr hochgeklappt befindet, in einer überwiegend vertikalen verlaufenden Ebene relativ zur Aufstandsebene zu verschieben, wobei die Verschiebung in der überwiegend vertikalen verlaufenden Ebene dazu genutzt wird, die Transporthöhe des Rechkreisels auf ein Minimum zu begrenzen, so dass der Abstand zur Aufstandsfläche näherungsweise identisch zu Null verschwinden kann. Diese erfinderische Ausgestaltung ist dann von besonderem Vorteil, wenn der Rechkreiseldurchmesser bereits so groß ausgeführt ist, dass er näherungsweise selber bereits die zulässige Transporthöhe erreicht. Dieses ist insbesondere dann von großer Bedeutung, wenn dann die Rechzinken in der Transportfahrt aus vorgenannten Gründen am Rechkreisel verbleiben sollen.

Im Weiteren sieht die Erfindung dabei vor, den Rechkreisel eines Kreiselschwaders mit einer Verschiebevorrichtung als Teil seines Auslegerarms, welche als Führungsschlitten mit einem Antrieb ausgebildet ist, aufzunehmen, und ihn dadurch längs eines Verschiebeweges an seinem Auslegerarm so verschieben zu können, dass der Rechkreisel trotz großer Durchmesser soweit abgesenkt werden kann, dass der Bodenabstand durch diese Verschiebung auf ein Minimum, und dabei fernverstellbar, variabel eingestellt werden kann, um somit die zulässige Transporthöhe eines Straßentransportprofils bei großen Kreiseldurchmessern voll ausschöpfen zu können, ohne dass zusätzliche Maßnahmen, wie das Abnehmen oder Einklappen von Zinkenarmen ergriffen werden müssen, um die Transporthöhe nicht zu überschreiten. Weiterhin ist es das Ziel der Erfindung in Verbindung mit dieser erfinderischen Ausgestaltung des Kreiselschwaders, die Arbeitsbreite stufenlos innerhalb definierter Grenzen fernverstellbar verändern zu können.

Nähere Einzelheiten der Erfindung sind den nachfolgenden Figurendarstellungen und deren Beschreibungen zu entnehmen.

Die Figuren Fig. 1 bis Fig.3 zeigen ein Ausführungsbeispiel eines erfinderischen Kreiselschwaders 1, ausgebildet als Seitenschwader in Arbeitsstellung, d.h. mit herunter geklappten, am Boden mittels Tast- und Stützrädern 7 abgestützten Rechkreiseln 2,2'. Fig.1 zeigt eine Ansicht auf den Kreiselschwader 1 von der Seite mit Blickrichtung quer zur Fahrtrichtung F. Fig.2 zeigt eine Draufsicht auf die Arbeits- bzw. Aufstandsebene und Fig.3 zeigt eine Ansicht mit Blickrichtung entgegen der Fahrtrichtung F von vorn.
Die Rechkreisel 2,2' sind an den freien Enden ihrer Auslegerarme 9,9' in an sich bekannter Weise in einer kardanischen Anlenkung 12 an diese angelenkt und die gebundenen Enden der Auslegerarme 9,9' sind in Klappgelenken 10,10' mit den in Fahrtrichtung F verlaufenden Gelenkachsen 11,11' ebenfalls in an sich bekannter Weise an ein Fahrgestell 4 angelenkt. Das Fahrgestell 4 ist ausgeführt als ein am hinteren Ende auf Laufrädern 6 am Boden abgestützten deichselbildendem Längsholm 5. Am vorderen Ende des Kreiselschwaders 1 befindet sich die in bekannter Weise ausgeführte Kupplungseinrichtung 8 zum Anschluss an die unteren Kupplungspunkte der Unterlenker des 3-Punktkrafthebers eines Traktors.

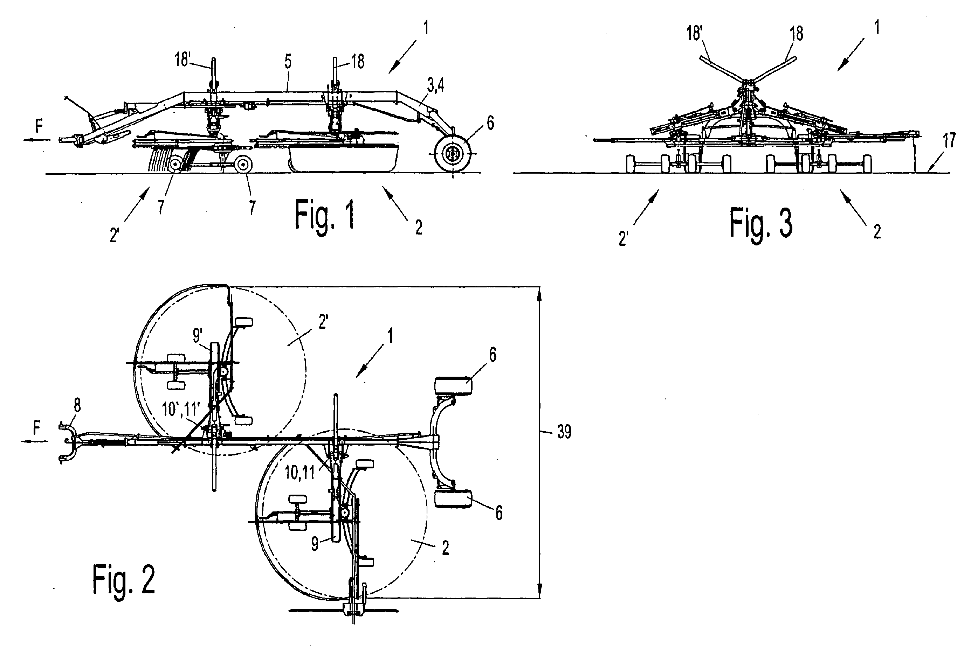

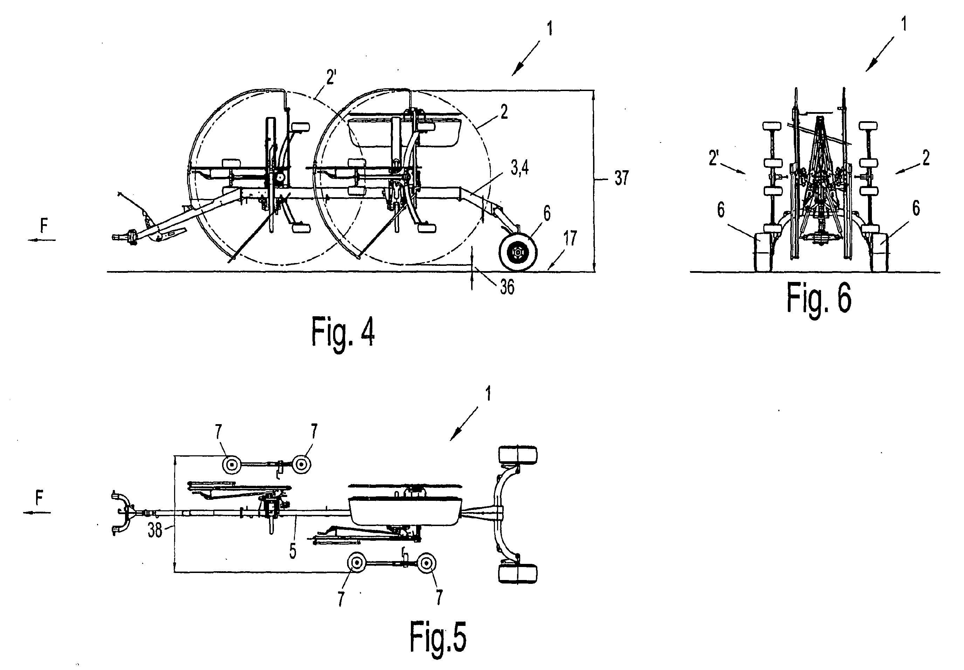

Die Figuren Fig. 4, Fig.5 und Fig.6 zeigen analog den Darstellungen gemäß den Fig.1 bis Fig.3 die gleichen Ansichten des dargestellten Kreiselschwaders 1, nunmehr aber in der Transportposition, d.h. mit hochgeklappten Auslegerarmen 9,9' und den daran abgesenkten Rechkreiseln 2,2' nach der Erfindung.

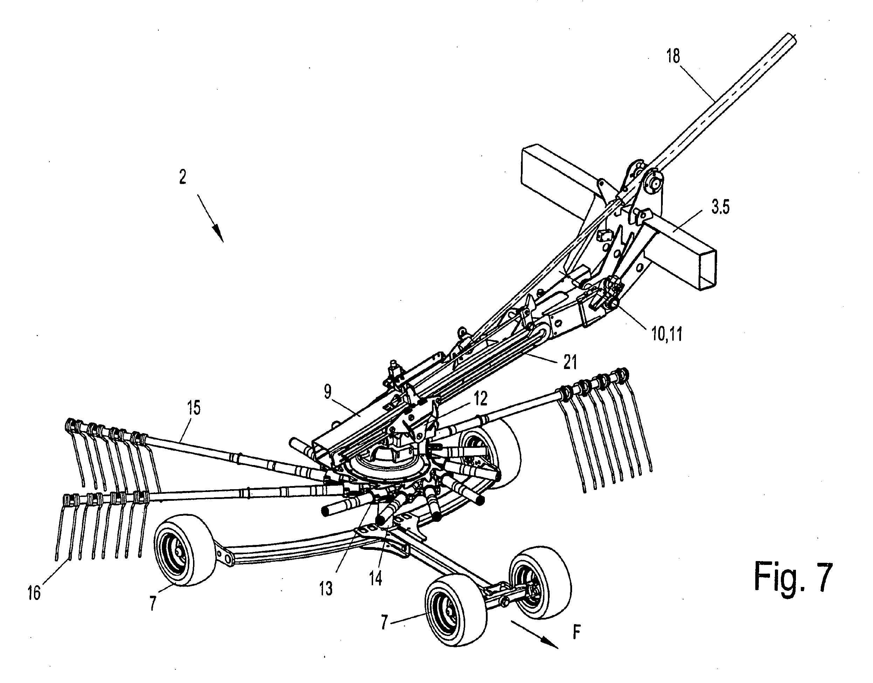

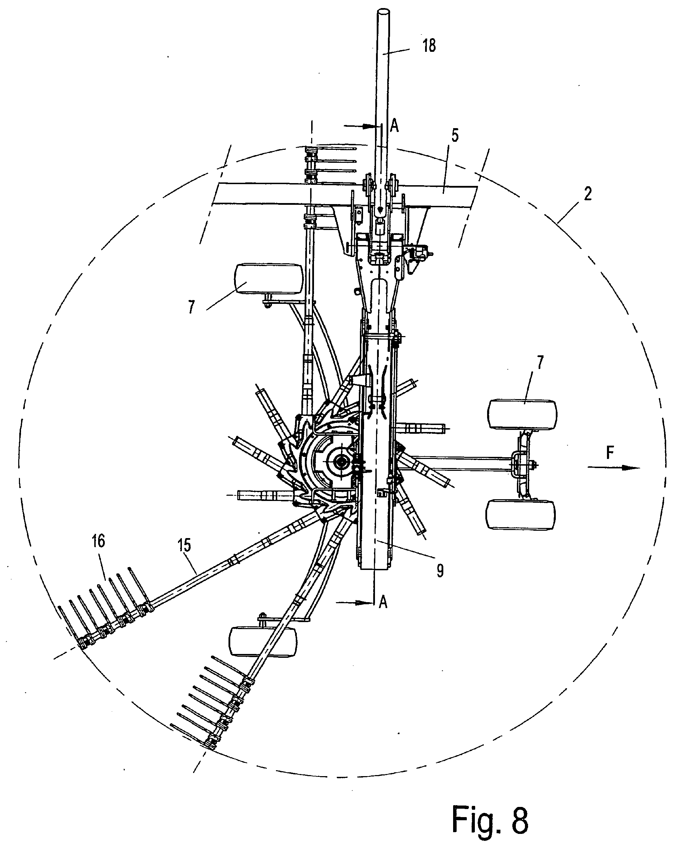

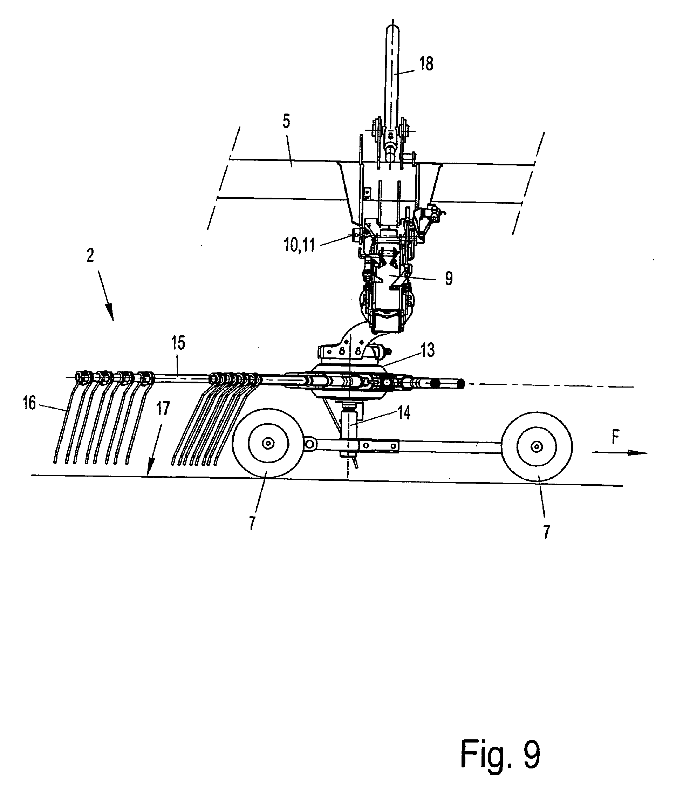

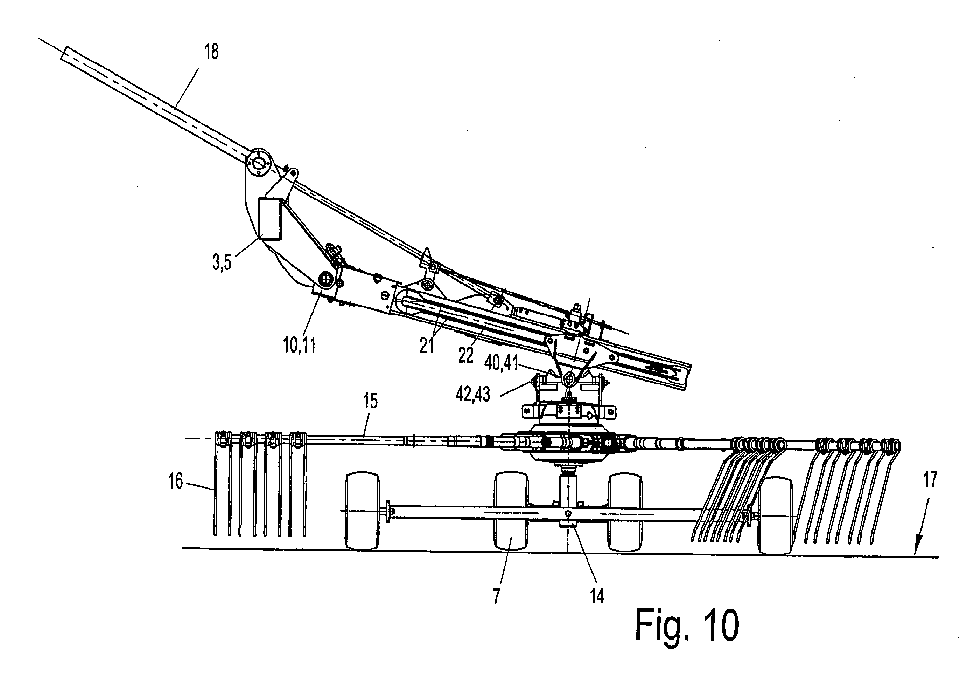

Fig.7 zeigt den Rechkreisel 2 mit seinem Ausleger 9 nach der Erfindung in einer perspektivischen Darstellung und Fig.8 zeigt die gleiche Situation gemäß Fig. 7 in einer Ansicht von oben als Draufsicht auf die Arbeitsebene. Der besseren Übersicht halber sind von den zwölf vorgesehenen mit Rechzinken 16 bestückten Zinkenarmen 15 nur drei von diesen dargestellt. Die von einer Kurvenbahn gesteuerten umlaufend um die Kreiselachse 14 angetriebenen Rechzinken 16 und Zinkenarme 15 sind in Lagern des Kreiselgehäuses 13 gelagert. Die Fig. 9 zeigt die Ansicht des Rechkreisels 2 in Richtung X und Fig.10 den Rechkreisel 2 in Richtung Y gemäß Fig.8 mit den Tast- und Stützrädern 7 auf der Aufstandsebene 17 abgestützt. Die Auslegerarme 9,9' und deren Rechkreisel 2,2' können von Hydraulikzylindern 18,18' betätigt in ihre Transportstellung angehoben und verklappt werden. Die in der Fig. 7 bis Fig. 10 dargestellte Arbeitsposition des Rechkreisels 9 stellt die innere Arbeitsposition 33 der Arbeitsbreite 39 des Kreiselschwaders 1 dar.

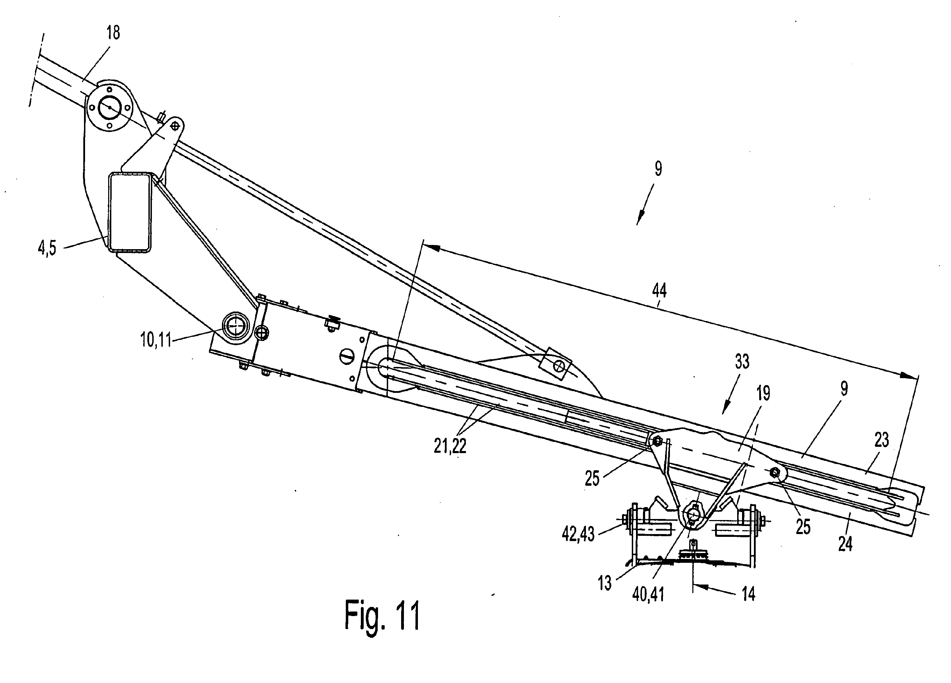

Fig. 11 zeigt einen Ausschnitt aus Fig.10 bzw. den Auslegerarm mit Blickrichtung in Richtung X gemäß Fig. 8 mit einem Führungsschlitten 19, der sich nach dem Prinzip einer Laufkatze am Ausleger 9 geführt an diesem entlang bewegen kann. Der Führungsschlitten 19 befindet sich in der inneren Arbeitsposition, d.h. es ist die geringste Arbeitsbreite 39 des Kreiselschwaders 1 dargestellt. Die gelenkige Kopplung der Rechkreisel 9,9' mit dem Führungsschlitten 19 erfolgt über ein Koppelgelenk 40 mit einer etwa in Fahrtrichtung F verlaufenden Gelenkachse 41 und einem Koppelgelenk 42 mit einer etwa quer zur Fahrtrichtung F verlaufenden Gelenkachse 43. Dem Prinzip nach handelt es sich bei der Kombination dieser beiden Koppelgelenke 40,42 um eine kardanische Anlenkung 12 der Rechkreisel an die Ausleger 9,9', wobei sich die Gelenkachsen 41,43 mit geringem Abstand zueinander kreuzen.

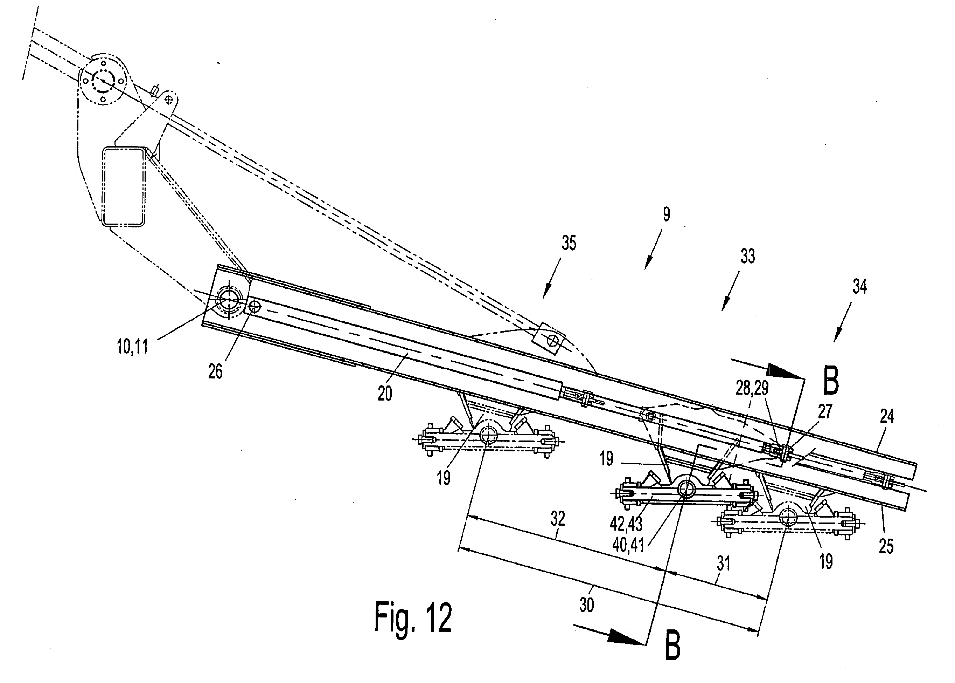

Fig. 12 zeigt den Längsschnitt A-A gemäß Fig.8. Somit ist der Führungsschlitten 19 Teil der Anlenkung 12 der Rechkreisel 2,2', wobei der Führungsschlitten sich in dem dargestellten Schnitt A-A ebenfalls in der inneren Arbeitsposition 33 befindet, wobei aber zugleich der Führungsschlitten 19 in der äußersten Arbeitsposition 34 und in der inneren Endlage, d.h. in seiner Transportposition 35 angedeutet ist. Der Führungsschlitten 19 wird von Gleitkufen 24, welche vorzugsweise aus einem Kunststoff mit günstigen Gleit und Verschleißeigenschaften hergestellt sind, aufgenommen. Diese können aber auch als Führungsrollen 25 ausgebildet sein. Der Führungsschlitten 19 mit seinen Gleitkufen 25 wird von dem jeweiligen Auslegerarm 9 in einer Prismenführung 21 längsverschiebbar aufgenommen. Die Prismenführung 21 schließt einen Schlitz, als Langloch 22 ausgebildet, ein, welches es ermöglicht, dass der Antrieb des Führungsschlittens 19 als innerhalb des Auslegerarms 9 untergebrachter Hydraulikzylinder 20 ausgebildet sein kann. Der hintere Anschlagpunkt 26 des Hydraulikzylinders 20 stützt sich dabei an dem Auslegerarm 9 und der vordere Anschlagpunkt 27, ausgebildet als Gabelkopf 28, stützt sich an einem Gelenkbolzen 29 einer Bolzenverbindung am Führungsschlitten ab. Der Hydraulikzylinder 20 dient dabei zugleich als Feststellelement für den Führungsschlitten 19 durch hydraulische Einspannung des Kolbens des Hydraulikzylinders 20.

Der gesamte Verschiebeweg 30 ist Teil der Längserstreckung 44 der Prismenführung 21 und er setzt sich aus zwei Teilstücken zusammen, aus einer inneren Sektion 32 und einer äußeren Sektion 31. Die äußere Sektion kann genutzt werden zur stufenlosen Arbeitsbreitenverstellung der Rechkreisel 2,2' und die innere Sektion wird genutzt, um den Rechkreisel in eine Endlage als Transportposition zu verschieben. Vorzugsweise sind dabei die Rechkreiseldurchmesser D so gewählt, dass diese in einem Durchmesserbereich von ca. 3500 bis 4200 mm, vorzugsweise etwa bei 3800 mm liegen. Der Verschiebeweg 30 der inneren Sektion 32 ist dabei so gewählt, dass bei hochgeklappten Auslegerarmen 9,9' die Transporthöhe 37 innerhalb der Grenzen von 3800 mm bis 4200 mm liegen kann, ohne dass dazu ein Teil der Zinkenarme 15 von den Rechkreiseln 2.2' entfernt werden müsste. Dabei ist die Ansteuerung des Hydraulikzylinders 20 so ausgestaltet, dass einerseits der geringste Bodenabstand 36 der Rechkreisel 2,2' in Ausnahmesituationen etwa zu Null verschwinden kann und andererseits beim Überfahren von Bodenwellen der Rechkreisel 2,2' in Ausnahmesituationen innerhalb des Verschiebeweges 30 der inneren Sektion 32 angehoben werden kann um dadurch vorübergehend einen größeren Bodenabstand 36 zu bekommen. Vorzugsweise liegt das Minimum des Bodenabstands 36 in einem Intervall von 100 mm bis 300 mm und dabei insbesondere diskret vorzugsweise bei etwa 200 mm.

Ebenfalls vorzugsweise liegt ein weiteres Minimum des Bodenabstands 36 in einem Intervall von näherungsweise 0 mm bis 200mm, wobei dieses wiederum vorzugsweise bei etwa 100 mm liegt.

Steuerungstechnisch ist dabei sicher gestellt, dass diese außerplanmäßigen Senk- oder Hubbewegungen der Rechkreisel innerhalb der inneren Sektion nicht dazu führen können, dass die Rechkreisel 2,2' ihre sichere verklappte Transportstellung verlassen können, wodurch sie dann Gefahr bringende Bewegungen im Straßenverkehr verursachen könnten.

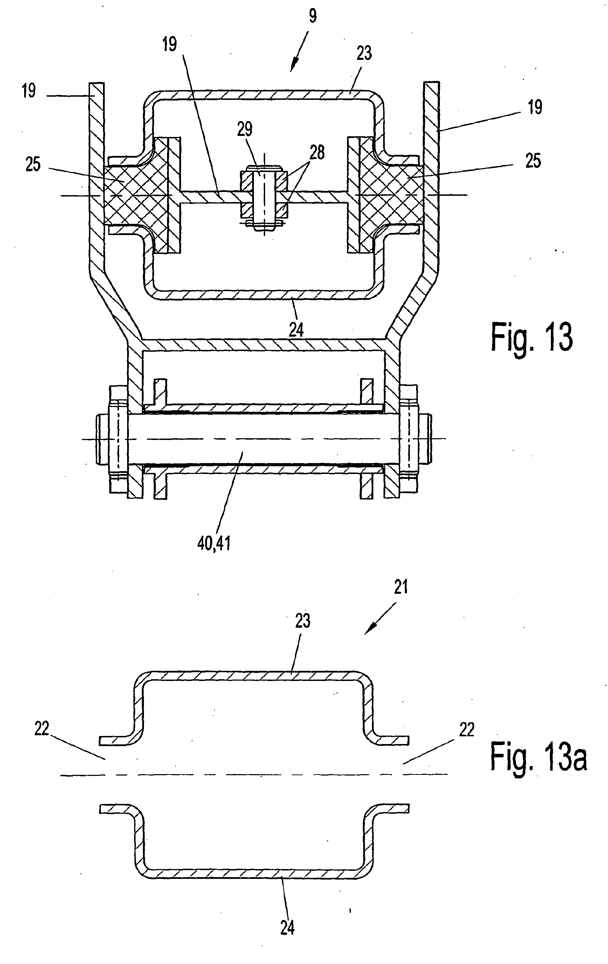

Fig. 13 zeigt den Schnitt B-B gemäß Fig. 12 und Fig. 13a zeigt den freigelegten Querschnitt des Auslegerarms gemäß Schnitt B-B aus Fig.13, bestehend aus einem oberen Prisma 23 und einem unteren Prisma 24. Diese sind so ausgeführt, dass sie als Abkantprofile aus Blechen hergestellt werden können, welches eine besonders kostengünstige Lösung darstellt.

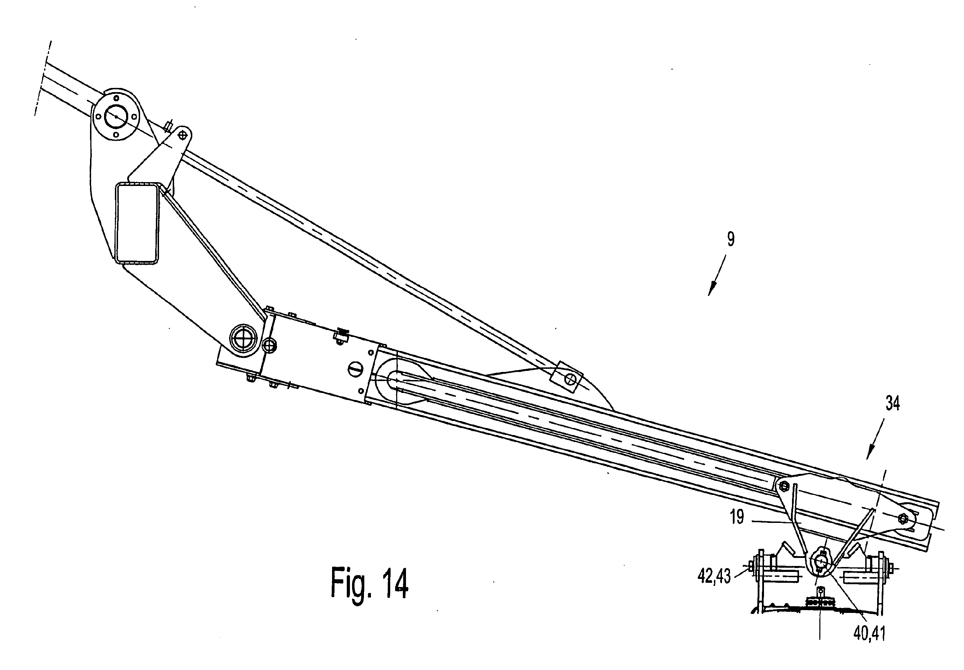

Fig.14 zeigt den Führungsschlitten 19 eines Rechkreisels 2,2' in seiner äußersten Arbeitsposition 34.

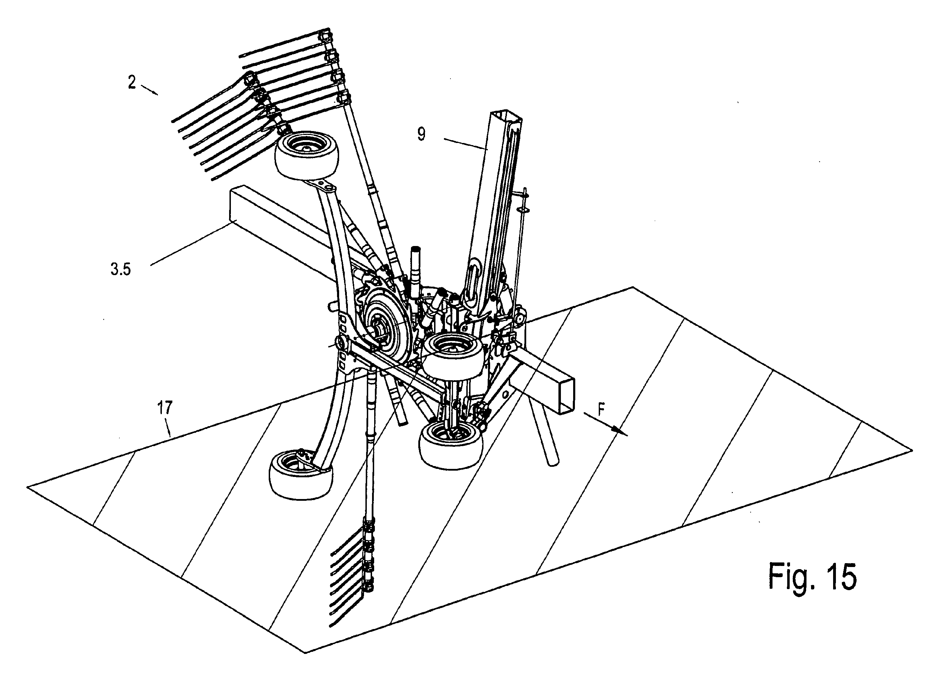

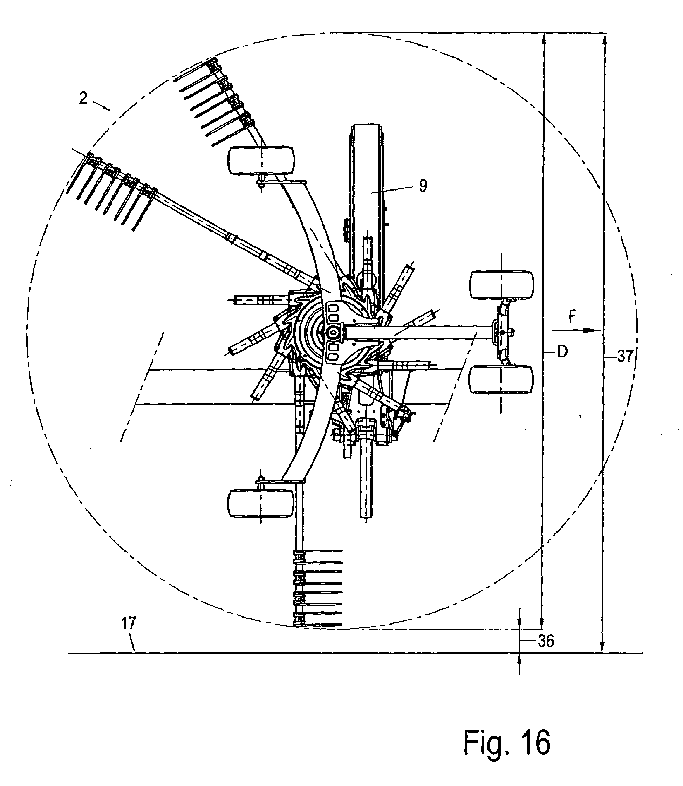

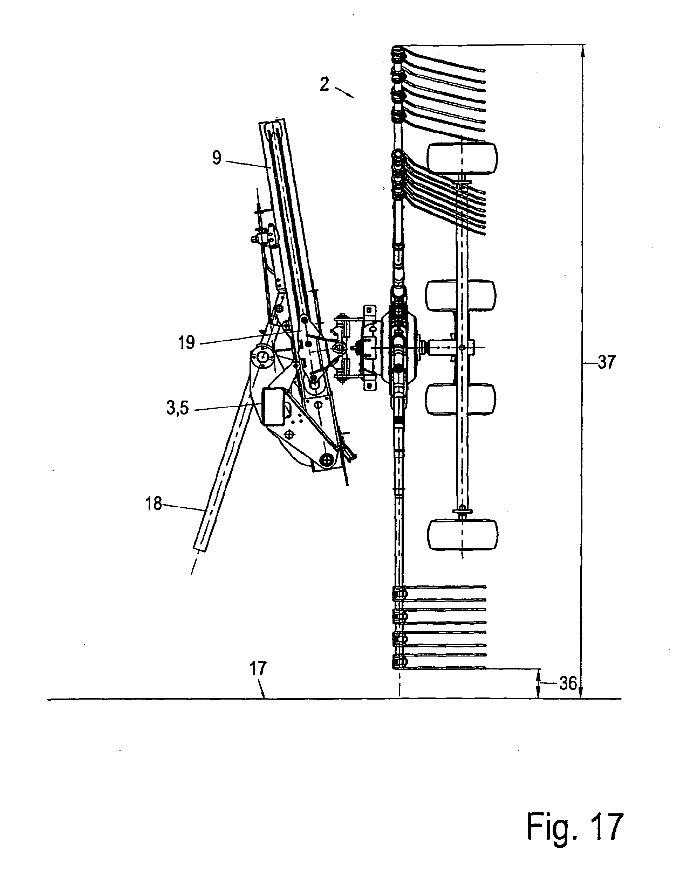

Fig. 15 zeigt den Auslegerarm gemäß Fig. 7, nunmehr jedoch in der angehobenen Transportposition mit abgesenktem Rechkreisel 9 und Fig.16 zeigt die Ansicht des hochgeklappten Rechkreisels mit Blickrichtung Y gemäß Fig. 15, wohingegen Fig. 17 die Ansicht des hochgeklappten Rechkreisels 9 mit Blickrichtung Z zeigt.

Die Ansteuerung des Hydraulikzylinders 20 kann fernverstellbar aus der Kabine des Traktors heraus durch ein einfach oder doppelwirkendes Steuergerät erfolgen. Ein einfach wirkendes Steuergerät ist deshalb möglich, da die Schwerkraft des Rechkreisels 2,2' ausreichend ist, diesen in hochgeklappter Position abzusenken. Das Verschieben des Rechkreisels 2,2' in seine Arbeitsposition erfolgt dann durch Druckbeaufschlagung der Kolbenbodenseite des Hydraulikzylinders 20.

### Bezugszeichenliste

- 1: Kreiselschwader
- 2,2': Rechkreisel
- 3: Maschinengestell
- 4: Fahrgestell
- 5: Längsholm
- 6: Laufräder
- 7: Tast- und Stützräder
- 8: Kupplungseinrichtung
- 9,9': Auslegerarm
- 10,10': Klappgelenk
- 11,11': Gelenkachse
- 12: Anlenkung
- 13: Kreiselgehäuse
- 14: Kreiselachse
- 15: Zinkenarm
- 16: Rechzinken
- 17: Aufstandsebene
- 18,18': Hydraulikzylinder
- 19: Führungsschlitten
- 20: Hydraulikzylinder
- 21: Prismenführung
- 22: Langloch
- 23: oberes Prisma
- 24: unteres Prisma
- 25: Gleitkufe, Führungsrolle
- 26: hinterer Anschlagpunkt
- 27: vorderer Anschlagpunkt
- 28: Gabelkopf
- 29: Gelenkbolzen
- 30: Verschiebeweg
- 31: äußere Sektion
- 32: innere Sektion
- 33: innere Arbeitsposition
- 34: äußere Arbeitsposition
- 35: Transportposition
- 36: Bodenabstand
- 37: Transporthöhe
- 38: Transportbreite
- 39: Arbeitsbreite
- 40: Koppelgelenk
- 41: Gelenkachse
- 42: Koppelgelenk
- 43: Gelenkachse
- 44: Längserstreckung
- D: Rechkreiseldurchmesser
- F: Fahrtrichtung

## Patentansprüche

1. Heuwerbungsmaschine, insbesondere Kreiselschwader, mit wenigstens einem, um eine aufrechte Kreiselachse umlaufend angetriebenen Rechkreisel, welcher Zinkenarme mit Rechzinken aufweist und wobei der Rechkreisel an einem Maschinengestell (3) mittels eines Auslegerarms verklappbar um ein Klappgelenk an diesem angelenkt ist, und wobei der Abstand des Rechkreisels zu relativ zum Klappgelenk längs eines Verschiebewegs (30), der im Wesentlichen in Längserstreckung des Auslegerarms (9,9') verläuft, veränderbar ist und der Rechkreisel am Boden durch Tast- und Stützräder abstützbar ist, und wobei durch Verklappung eines Auslegers ein Rechkreisel von einer Arbeitsposition in eine angehobene Transportposition und umgekehrt überführbar ist, **dadurch gekennzeichnet, dass** der Rechkreisel von einem Führungsschlitten (19) innerhalb einer Prismenführung von einem Stellantrieb, ausgebildet als Hydraulikzylinder (20), verschiebbar aufgenommen wird, dessen Verschiebeweg (30) sich über zwei Sektionen (31,32), einer inneren (32) und einer äußeren Sektion (31) erstreckt, wobei der Führungsschlitten (19) in der äußeren Sektion (31) in einer überwiegend horizontalen verlaufenden Ebene und In der inneren Sektion (32) in einer überwiegend vertikalen verlaufenden Ebene relativ zur Aufstandsebene (17) verschlebbar ist, wobei die Ansteuerung des Hydraulikzylinders (20) so aufgelegt ist, dass der Rechkreisel (2,2') während der Transportfahrt längs der Prismenführung angehoben oder abgesenkt werden kann und steuerungstechnisch sicher gestellt ist, dass die Senk- oder Hubbewegungen der Rechkreisel Innerhalb der inneren Sektion nicht dazu führen können, dass die Rechkreisel ihre sichere verklappte Transportposition verlassen können.

2. Heuwerbungsmaschine nach Anspruch 1, **dadurch gekennzeichnet, dass** bei einem Rechkreiseldurchmesser (D) in den Grenzen von 3500 mm bis 4000 mm, vorzugsweise etwa bei 3800 mm, eine Transporthöhe von 4000 mm +1- 200 mm nicht überschrillen wird.

3. Heuwerbungsmaschine nach Anspruch 1, **dadurch gekennzeichnet, dass** das Minimum des Bodenabstands (36) des hochgeklappten Rechkreisels (2,2') In einem Intervall von 100 mm bis 300 mm, vorzugsweise bei 200 mm, liegt.

4. Heuwerbungsmaschine nach Anspruch 1, **dadurch gekennzeichnet, dass** das Minimum des Bodenabstands (36) des hochgeklappten Rechkreisels (2,2') in einem Intervall von näherungsweise 0 mm bis 200mm, vorzugsweise bei 100mm, liegt.

5. Heuwerbungsmaschine nach Anspruch 1, **dadurch gekennzeichnet, dass** die Verschiebevorrichtung einen Führungsschlitten (19) nach dem Prinzip einer Laufkatze aufweist.

6. Heuwerbungsmaschine nach Anspruch 5, **dadurch gekennzeichnet, dass** der Führungsschlitten (19) Teil der Anlenkung (12) des Rechkreisels (2,2') ist.

7. Heuwerbungsmaschine nach Anspruch 6, **dadurch gekennzeichnet, dass** die Anlenkung (12) als kardanische Anlenkung (12) ausgestaltet ist.

8. Heuwerbungsmaschine nach Anspruch 1 bis 7, **dadurch gekennzeichnet, dass** der Auslegerarm (9,9') eine Prismenführung (21) In seiner Längserstreckung (44) aufweist.

9. Heuwerbungsmaschine nach Anspruch 8, **dadurch gekennzeichnet, dass** die Prismenführung (21) einen Verschiebeweg (30) aufweist, dessen Längserstreckung (44) so bemessen ist, dass eine Verschiebung des Rechkreisels (2,2') von einer Arbeitsposition (33,34) in eine Transportposition (35) derart möglich ist, dass der Bodenabstand (36) bei einem hochgeklappten Rechkreisel (2,2') variabel auf ein Minimum näherungsweise gegen Null einstellbar ist.

10. Heuwerbungsmaschine nach einem der vorhergehenden Ansprüche, **dadurch gekennzeichnet, dass** der Führungsschlitten (19) von einer Prismenführung (21) aufgenommen wird.

11. Heuwerbungsmaschine nach einem der vorhergehenden Ansprüche, **dadurch gekennzeichnet, dass** der Führungsschlitten (19) von einem Hydraulikzylinder (20) verschiebbar ist und wobei der Führungsschlitten (19) von dem Hydraulikzylinder (20) zugleich auch festsetzbar ist.

12. Heuwerbungsmaschine nach Anspruch 11, **dadurch gekennzeichnet, dass** der Hydraulikzylinder (20) doppeltwirkend ausgeführt ist.

13. Heuwerbungsmaschine nach Anspruch 11, **dadurch gekennzeichnet, dass** der Hydraulikzylinder (20) einfachwirkend ausgeführt ist.

14. Heuwerbungsmaschine nach Anspruch 12, **dadurch gekennzeichnet, dass** die Ansteuerung des Hydraulikzylinders (20) so ausgelegt ist, dass der Rechkreisel (2.2') während der Transportfahrt fernverstellbar längs der Prismenführung angehoben oder abgesenkt werden kann.

## Claims

1. A hay-making machine, in particular a rotary swather, comprising at least one rake rotor rotationally driven about a vertical rotor axis and which has tine arms with rake tines and wherein the rake rotor is pivotably mounted to a machine frame (3) pivotably by means of a boom arm about a pivot joint and wherein the spacing of the rake rotor relative to the pivot joint is variable along a displacement path (30) which extends substantially in the longitudinal extent of the boom arm (9, 9') and the rake rotor can be supported on the ground by feeler and support wheels and wherein a rake rotor can be moved from a working position into a raised transport position and vice-versa by pivotal movement of a boom, **characterised in that** the rake rotor is carried by a guide carriage (19) within a prism guide displaceably by an adjusting drive in the form of a hydraulic cylinder (20), the displacement path (30) of which extends over two sections (31, 32), an inner section (32) and an outer section (31), wherein the guide carriage (19) is displaceable in the outer section (31) in a predominantly horizontally extending plane and in the inner section (32) in a predominantly vertically extending plane relative to the plane (17) on which it stands, wherein actuation of the hydraulic cylinder (20) is such that the rake rotor (2, 2') can be raised or lowered during transport travel along the prism guide and it is ensured by control technology that the lowering or raising movements of the rake rotors within the inner section cannot lead to the rake rotors being able to leave their safe pivoted transport position.

2. A hay-making machine according to claim 1 **characterised in that** with a rake rotor diameter (D) in the limits of 3500 mm to 4000 mm, preferably about 3800 mm, a transport height of 4000 mm +/- 200 mm is not exceeded.

3. A hay-making machine according to claim 1 **characterised in that** the minimum of the ground clearance (36) of the upwardly pivoted rake rotor (2, 2') is in a range of 100 mm to 300 mm, preferably being 200 mm.

4. A hay-making machine according to claim 1 **characterised in that** the minimum of the ground clearance (36) of the upwardly pivoted rake rotor (2, 2') is in a range of approximately 0 mm to 200 mm, preferably being 100 mm.

5. A hay-making machine according to claim 1 **characterised in that** the displacement device has a guide carriage (19) operating on the principle of a crane trolley.

6. A hay-making machine according to claim 5 **characterised in that** the guide carriage (19) is part of the pivotal mounting (12) of the rake rotor (2, 2').

7. A hay-making machine according to claim 6 **characterised in that** the pivotal mounting (12) is in the form of a Cardan pivotal mounting (12).

8. A hay-making machine according to claims 1 to 7 **characterised in that** the boom arm (9, 9') has a prism guide (21) in its longitudinal extent (44).

9. A hay-making machine according to claim 8 **characterised in that** the prism guide (21) has a displacement path (30) whose longitudinal extent (44) is of such a size that a displacement of the rake rotor (2, 2') from a working position (33, 34) into a transport position (35) is possible in such a way that with an upwardly pivoted rake rotor (2, 2') the ground clearance (36) is adjustable variably to a minimum approximately towards zero.

10. A hay-making machine according to one of the preceding claims **characterised in that** the guide carriage (19) is carried by a prism guide (21).

11. A hay-making machine according to one of the preceding claims **characterised in that** the guide carriage (19) is displaceable by a hydraulic cylinder (20) and wherein the guide carriage (19) can at the same time also be fixed by the hydraulic cylinder (20).

12. A hay-making machine according to claim 11 **characterised in that** the hydraulic cylinder (20) is of a double-acting configuration.

13. A hay-making machine according to claim 11 **characterised in that** the hydraulic cylinder (20) is of a single-acting configuration.

14. A hay-making machine according to claim 12 **characterised in that** actuation of the hydraulic cylinder (20) is such that the rake rotor (2, 2') can be raised or lowered during transport travel under remote control along the prism guide.

## Revendications

1. Machine de fenaison, en particulier andaineur rotatif, comprenant au moins un râteau rotatif qui est entraîné en rotation autour d'un axe vertical et présente des bras porte-dents avec des dents de râteau, et le râteau rotatif étant articulé sur un châssis de machine (3) au moyen d'un bras, avec possibilité de basculement autour d'une articulation repliable, et la distance du râteau rotatif par rapport à 'l'articulation repliable pouvant être modifiée le long d'une course de déplacement (30) qui s'étend sensiblement dans le sens de la longueur du bras (9, 9'), et le râteau rotatif pouvant prendre appui sur le sol par l'intermédiaire de roues de jauge et d'appui, et le basculement d'un bras permettant d'amener un râteau rotatif d'une position de travail dans une position de transport soulevée et inversement, **caractérisée par le fait que** le râteau rotatif est monté sur un chariot de guidage (19), à l'intérieur d'un guide prismatique, avec possibilité de déplacement par une servocommande, réalisée sous forme de vérin hydraulique (20), dont la course de déplacement (30) s'étend sur deux sections (31, 32), à savoir une section intérieure (32) et une section extérieure (31), le chariot de guidage (19) pouvant être déplacé par rapport au plan d'appui (17), dans un plan essentiellement horizontal dans la section extérieure (31) et dans un plan essentiellement vertical dans la section intérieure (32), l'activation du vérin hydraulique (20) étant conçue telle que le râteau rotatif (2,2') puisse être soulevé ou abaissé le long du guide prismatique pendant le transport et soit immobilisé par la technique de commande, **par le fait que** les mouvements de descente ou de montée des râteaux rotatifs dans la section intérieure ne peuvent pas amener les râteaux rotatifs à quitter leur position de transport basculée sûre.

2. Machine de fenaison selon la revendication 1, **caractérisée par le fait qu'**avec un diamètre (D) de râteau rotatif qui est compris dans les limites allant de 3500 mm à 4000 mm et est de préférence d'environ 3800 mm, une hauteur de transport de 4000 mm +1-200 mm n'est pas dépassée.

3. Machine de fenaison selon la revendication 1, **caractérisée par le fait que** le minimum de la distance par rapport au sol (36) du râteau rotatif (2, 2') relevé se situe dans un intervalle compris entre 100 mm et 300 mm et est de préférence de 200 mm.

4. Machine de fenaison selon la revendication 1, **caractérisée par le fait que** le minimum de la distance par rapport au sol (36) du râteau rotatif (2, 2') relevé se situe dans un intervalle compris approximativement entre 0 mm et 200 mm et est de préférence de 100 mm.

5. Machine de fenaison selon la revendication 1, **caractérisée par le fait que** le dispositif de déplacement comporte un chariot de guidage (19) fonctionnant selon le principe d'un chariot de pont roulant.

6. Machine de fenaison selon la revendication 5, **caractérisée par le fait que** le chariot de guidage (19) fait partie de l'articulation (12) du râteau rotatif (2, 2').

7. Machine de fenaison selon la revendication 6, **caractérisée par le fait que** l'articulation (12) est réalisée sous forme d'articulation à la Cardan (12).

8. Machine de fenaison selon les revendications 1 à 7, **caractérisée par le fait que** le bras (9, 9') présente un guide prismatique (21) dans le sens de sa longueur (44).

9. Machine de fenaison selon la revendication 8, **caractérisée par le fait que** le guide prismatique (21) présente une course de déplacement (30) dont la longueur (44) est prévue telle qu'un déplacement du râteau rotatif (2, 2') d'une position de travail (33, 34) dans une position de transport (35) soit possible de manière telle que la distance par rapport au sol (36) pour un râteau rotatif (2, 2') relevé puisse être réglée de façon variable à un minimum approchant de zéro.

10. Machine de fenaison selon une des revendications précédentes, **caractérisée par le fait que** le chariot de guidage (19) est monté sur un guide prismatique (21).

11. Machine de fenaison selon une des revendications précédentes, **caractérisée par le fait que** le chariot de guidage (19) peut être déplacé par un vérin hydraulique (20) et le chariot (19) peut en même temps également être immobilisé par le vérin hydraulique (20).

12. Machine de fenaison selon la revendication 11, **caractérisée par le fait que** le vérin hydraulique (20) est réalisé avec double effet.

13. Machine de fenaison selon la revendication 11, **caractérisée par le fait que** le vérin hydraulique (20) est réalisé avec simple effet.

14. Machine de fenaison selon la revendication 12, **caractérisée par le fait que** l'activation du vérin hydraulique (20) est prévue telle que le râteau rotatif (2, 2') puisse être relevé ou abaissé par télécommande le long du guide prismatique pendant le transport.
